# EUROPEAN PATENT SPECIFICATION

(11) **EP 4 470 861 B1**
(45) Date of publication and mention of the grant of the patent: **24.12.2025**
(21) Application number: 23176340.0
(22) Date of filing: 31.05.2023
(51) Int. Cl.: B60W 30/188, B60W 50/14, B60W 50/08

(54) **MONITORING AN IC ENGINE OF A FOREST HARVESTER**
ÜBERWACHUNG EINES IC-MOTORS EINER FORSTWIRTSCHAFTSMASCHINE
SURVEILLANCE D'UN MOTEUR À COMBUSTION INTERNE D'UNE RÉCOLTEUSE FORESTIÈRE

(43) Date of publication of application: 04.12.2024
(73) Proprietor: Deere & Company, Moline, IL 61265-8098 (US)
(72) Inventor: KOIVULA, Timo, 36100 Kangasala as. (FI)
(74) Representative: Berggren Oy

(56) References cited:
- EP-A1- 2 949 533
- EP-A1- 3 488 686
- WO-A1-03/096794
- US-A1- 2015 239 454
- US-A1- 2018 118 013
- US-A1- 2018 209 357

## Description

### Field of the invention

The present invention relates to forest work machines, and, more particularly, to a forest harvester including an internal combustion engine which may be used to drive primary and external loads. The present invention relates to a method for controlling the forest harvester.

### Background of the invention

A work machine, such as a forestry work machine, typically includes a power unit in the form of an internal combustion (IC) engine. The engine typically is in the form of a compression ignition engine, i.e. a diesel engine, having good characteristics for varying work operations. Such work operations bring about varying loads having an impact on the engine.

The response of the engine to a load change that may be transient is a feature mostly influenced by the engine characteristics and both the hardware included in the engine, for example a turbocharger, and a control strategy applied in a control unit including digital electronics and software elements, such as an engine control unit (ECU) or an engine control module (ECM). The control unit typically controls fuel injection, i.e. introduction of fuel into the engine, intake air flow, and engine speed and torque, for example with respect to requirements of emissions, fuel economy, and a setpoint or demand of the engine speed or torque, or limits applied, for example, for the engine speed and torque. The engine typically includes a driveshaft that is for transmitting mechanical power, torque and rotation.

The change in the load may be the result of a drivetrain load or auxiliary loads. The auxiliary loads are loads placed upon the engine through operating devices applied by the work machine, the devices including, for example, hydraulic actuators. With respect to the forest work machine, such as a forest harvester, such device is a harvester head including a sawing device and devices for feeding (e.g. feed wheels) and delimbing (e.g. blades) a tree stem that is being transferred through the harvester head. The mechanical power provided by the rotating driveshaft is converted to hydraulic energy and flow of pressurized fluid generated in a hydraulic power system of the forest work machine and to be utilized in the devices.

The engine reacts to the changing load applied to the driveshaft of the engine. The changing load may be caused by an increase in the demand of hydraulic energy. The speed of the engine may decrease, i.e. the speed droops, when the load increases and the rotational speed of the driveshaft decreases. The drop in the speed of the engine, i.e. a speed droop, is influenced by the control unit of the engine. The air flow, the fuel injection, and time delays for responding to the load may be modified for reacting to the change in the load. For example, the quantity of the injected fuel may be increased. The engine then recovers to the speed applied before the load change, e.g. the setpoint of the engine speed.

Typically, the forest work machine includes control electronics, e.g. an electronic control unit, applying software elements for controlling the devices and actuators of the forest work machine when an operator of the forest work machine actuates or sets off operations to be carried out by the forest work machine and its tools, e.g. the harvester head. The control electronics includes the control unit of the engine.

Modern forestry work machines may apply, in the control electronics, specific control strategies for optimizing productivity, machine performance and fuel economy. The forest work machine may include a so-called Processing Power Control (PPC) system introduced by John Deere (i.e. Deere & Company), see:
Paakkunainen M.: "Ergonomics and productivity improvements through machine automation"; pp. 5-8 of Abstracts and Proceedings of the 48th FORMEC Symposium 2015; Forest engineering: Making a positive contribution; Symposium on Forest Mechanization, Linz, Austria; ISBN 978-3-900932-29-9, or
https://www.formec.org/images/proceedings/2015/formec_proceedings_2015 _web.pdf

By means of the above PPC system including specific power levels, e.g. a 3-level system, the operator of the forest work machine is able to select one of the power levels deemed appropriate with respect to the skill level of the operator and the conditions for the operations to be carried out by the forest work machine and its tools under control of the operator. The power level may be selected by means of an input/output device included in the control electronics. For example, diameters and volumes of the tree stems of the felled trees being handled by, for example, the harvester head influence on the decision of the operator to select one of the power levels for use. The power levels offer differing levels of power generated by the engine, and thereby differing maximum hydraulic pressures and fluid flows generated by the hydraulic actuators of the forest work machine may be applied. Selecting the power level for use has an impact on the fuel economy and productivity.

In the above PPC system, for example at a worksite, having a lower hydraulic pressure and fluid flow available in one of the power levels is intended for operations involving tree stems with stem diameters and/or stem volumes smaller than a typical tree stem, a majority of the tree stems at the worksite, or tree stems of another worksite. Another one of the power levels offers increased or maximum power.

However, circumstances may change at the worksite and/or the operator may not react to the change by selecting another one of the available power level for use in order to maintain the operation of the forest work machine at an optimum level. Additionally, a less skilled operator may select a power level that is not suitable with respect to the circumstances. Hence, either the fuel efficiency or the machine performance may suffer.

EP 2949533 A1 discloses a method for controlling the primary motor of a load transportation machine. The method comprises detecting the work step of the load transportation machine, determining a value for a control parameter of the primary motor by utilizing the detected work step, and controlling the primary motor by means of the value of the control parameter.

### Brief summary of the invention

The method according to the invention is presented in claim 1.

The forest work machine according to the invention is presented in claim 14.

The dependent claims 2 to 13, and 15 present further examples of the invention.

The method for controlling a forest harvester includes measuring, when carrying out an operation, rotational speed of an engine; automatically determining, in a control electronics, a relative or absolute difference between the measured rotational speed of the engine and a predetermined guideline for the rotational speed of the engine, the guideline defining a preferred rotational speed or a range of preferred rotational speeds for the operation that is being carried out; and automatically notifying, by the control electronics, an operator of the forest harvester, that the determined difference either follows the guideline or the determined difference deviates from the guideline. The engine being adapted to deliver predetermined power levels during the operation.

According to an example, the notifying step includes informing the operator that the determined difference follows the guideline and no change of the power level being applied is not required, or the determined difference deviates from the guideline and change of the power level being applied is recommended, or the determined difference exceeds the guideline and change of the power level being applied is recommended, or the determined difference is less than the guideline and change of the power level being applied is recommended.

According to an example, the control electronics is adapted to, after the determining step, to recommend another one of the predetermined power levels to be applied.

According to an example, the operator selects one of the predetermined power levels to be applied and changes the currently applied power level with the help of the control electronics.

According to an example, the operation includes holding a tree stem of a felled tree in a harvester head, feeding the tree stem through the harvester head, and stopping and crosscutting the tree stem in the harvester head.

An advantage of the invention is that maximum performance of the engine is achieved when a reasonable amount of speed droop is encountered during an operation of the forest working machine, for example during feeding a tree stem held in the harvester head. This means good fuel economy and high productivity.

If the speed of the engine droops excessively, the forest working machine is operating in too heavy circumstances with respect to current machine parameters, i.e. the power level of the PPC system selected for the operation.

If the speed of the engine is very stable during the operation, it is probably working using one of the power levels that represents excess power reserves with respect to the current operation and characteristics, i.e. harvested material attributes, of the tree stems that are being processed. In these cases, the operator is noted that a more appropriate power level should be selected.

By automating measuring and calculating of the speed droop, the operator is provided with more accurate and intelligible data for making a decision to select the more appropriate power level.

### Description of the drawings

In the following, the invention will be described in more detail with reference to the appended drawings, in which
- Fig. 1: shows an example of a forest work machine constituting a forest harvester in which the invention can be applied,
- Fig. 2: shows in a schematical diagram indicating relevant control electronics of the forest harvester shown in Fig. 1, and
- Fig. 3: shows in a schematical flowchart relevant details of the method according to the invention, as applied in the forest harvester shown in Fig. 1.

### Detailed description of the invention

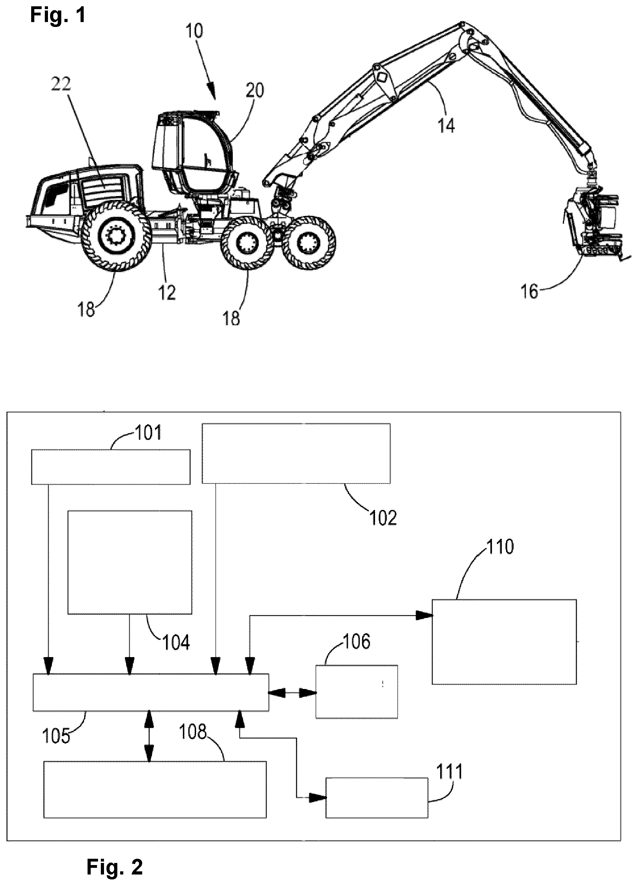

Figure 1 shows an example of a forest harvester 10 in which the invention can be applied.

The forest harvester 10 comprises a frame 12 supported on wheels 18 and the frame 12 may be articulated. The frame 12 supports an IC engine 22, e.g. a diesel engine, an operator's station 20 constituting a cabin and an articulated boom 14 with a tree stem processing harvester head 16 attached to its outer end.

During operation of the forest harvester 10, an operator sitting in the operator's station 20 drives the forest harvester 10 into a forest at a worksite and controls the harvester head 16 to grab a tree stem of a standing tree, to crosscut the tree stem off the ground, to lay the tree stem down in a controlled manner, to delimb the tree stem that is being feed through the harvester head 16, and to crosscut the tree stem into logs of desired length that are deposited in a pile on the ground by the harvester head 16.

Figure 2 shows a schematical diagram indicating relevant parts of the control electronics 100 of the forest harvester 10. The control electronics 100, constituting an electronic control unit of the forest harvester 10, a control unit (ECU) of the engine, and a PPC system, operatively connected to each other, comprises a data processor 108 that is connected via a data bus 105 to a user interface 101, e.g. an input/output device, a storage device 106, i.e. a memory device, and one or more sensors 104 for collecting data indicative of one or more harvested material attributes. The control electronics 100 may further comprise one or more sensors 111 for collecting data indicative of speed of the engine 22, e.g. the rotational speed of the engine 22 or its driveshaft, and one or more sensors 110 for collecting data indicative of position of the boom 14 and/or the harvester head 16.

The control electronics 100 of the forest harvester 10 applies software elements including algorithms for controlling devices and actuators of the forest work machine 10 when the operator actuates or sets off operations to be carried out by the forest work machine 10 and its tools, e.g. the harvester head 16.

The one or more sensors 104 may include sensors for collecting data indicative of diameter, length, size, volume, and/or species of the tree stem when delimbing and crosscutting the tree stem by the harvester head 16. The size of the tree stem is represented by the diameter and the length of the tree stem. Data related to the species may be input by the operator. The harvested material attributes of the tree stems can be collected, combined for analysis, and stored. The harvested material attributes may be used for quantifying, monitoring, and measuring activities at a worksite and forest depot.

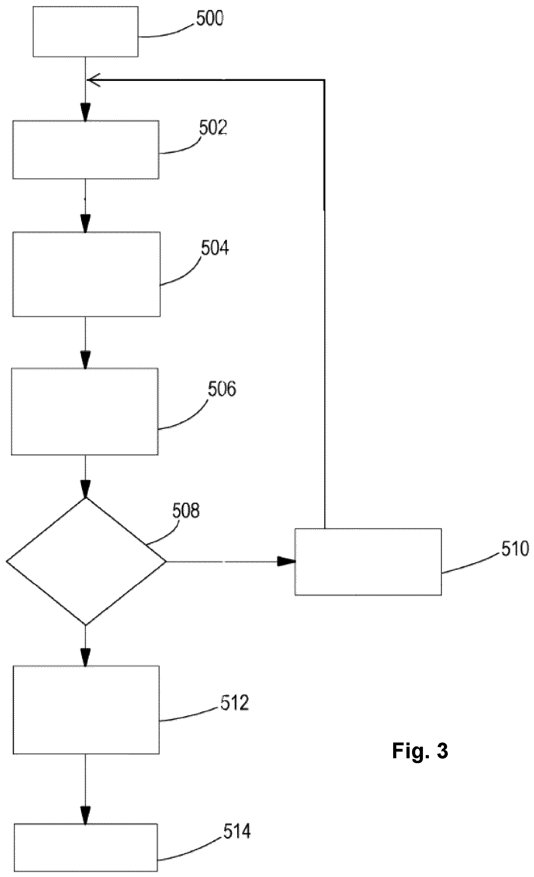

With reference to Fig. 3, in the presented invention (see step 500), applying an algorithm realized in the control electronics, the engine speed is monitored (step 502) during an operation of the harvester head 16, the operation being, for example, holding a crosscut tree stem in the harvester head 16, feeding the tree stem through the harvester head 16, for example for delimbing it, and stopping the tree stem for cross-cutting it for producing a log that is deposited on the ground, for example, into a pile.

Each felled tree having its tree stem crosscut off the ground may represent one tree stem in the presented invention.

However, the above operation may be repeated several times to process the tree stem completely while the tree stem is being fed and kept in the harvester head 16. Alternatively, the felled tree may represent several tree stems each subject to the above operation. Thus, each produced log may represent one tree stem in the presented invention. The calculations related to the tree stems have a bearing on how the tree stem is represented.

One or more of the harvested material attributes of the tree stem is measured or determined (see step 504), and stored, prior to or during the operation, with the help of the above one or more sensors 104. For example, the harvested material attribute is the diameter, the length, the size, the volume, or the species of the tree stem.

The current engine speed is measured and/or recorded continuously or repeatedly at suitable intervals for the tree stem subject to the above operation. An engine speed value based on calculating an average value, or another representative value, for the measured engine speed with respect to the tree stem may represent the engine speed for that tree stem. Alternatively, the measurement selected to represent the lowest measured engine speed for the tree stem may represent the engine speed of that tree stem. Also alternatively, a value representing an average drop, or a representative drop, or the maximum drop in the current engine speed compared to a requested speed of the engine, i.e. a setpoint or demand of the engine speed set by the control electronics 100, may be calculated for that tree stem.

The period of measurement may be continuous or involves at least one but typically several, dozens, or hundreds of tree stems and/or the above operations.

During the operation, decreasing of the engine speed to some extent is expected to take place in any case. The engine 22 reacts to the changing load applied to, for example, the driveshaft of the engine 22. The algorithm may define one or more guidelines, e.g. threshold values or optimum ranges, for the decreased engine speed with respect to one or more of the harvested material attributes specific to the tree stem subject to the operation. Alternatively, the optimum range is defined as a range of relative or absolute change of the engine speed, e.g. the amount or magnitude of the decrease in the engine speed. The optimum ranges are tabulated or stored by the algorithm.

For example, the optimum ranges may be set or changed by the operator, e.g. with the help of the user interface 101. Each optimum range may relate to a specific value or magnitude range of the harvested material attribute. For example, each optimum range represents the tree stems with a range of specific diameters.

Then (see step 506), the monitored engine speed, i.e. the measured/calculated speed of the engine 22, may be compared to the requested speed of the engine 22, i.e. the setpoint or demand of the engine speed. For example, the requested speed is set by the operator, e.g. with the help of the user interface 101 or through controlling the control electronics 100 and its devices. Alternatively, the requested speed may be specific to the power level of the PPC system and selected for use prior to setting off the operation.

During the operation, the forest harvester 10 applies the above PPC system included in the control electronics 100 and one of the power levels of the PPC system that is selected for use. The specific power level is selected by the operator with the help of, for example, the user interface 101.

As a result of the above comparing step, the decrease in the engine speed, i.e. the speed droop or droop of the engine, may be determined for each tree stem and/or a group of tree stems with similar harvested material attributes, and may be defined as a difference between the requested speed of the engine and the measured/calculated engine speed.

The control electronics 100 may be adapted to, when requested by the operator, display the speed droop and/or the optimum range of one or more tree stems in a graph, e.g. with the help of the user interface 101.

The power levels of the above PPC system offer differing levels of available or maximum power generated by the engine 22. The engine 22 reacts to changing load demands. When there is not enough power available from the engine 22, the speed of the engine 22 may decrease, i.e. the speed droops, the drop in the engine speed increasing with the load demand. The power levels may offer differing reserves of power that are available for any excessive power demanding phases occurring during the operation.

According to an example, the power levels relate to torque graphs available in the engine 22 and selectable with the help of the control unit (ECU). In each graph, available torque may be represented in relation to the engine speed. Data, e.g. in control parameters, controlling fuel injection of the engine and stored in the control unit is applied to obtain a specific torque graph. Setting the engine 22 to function according to different different torque graphs takes place by changing the control parameters electrically, e.g. with the help of the PPC system.

When the above decrease or difference is determined, the speed droop for the tree stem may be more than, or even less than, the recommended speed droop defined by the above optimum range. This may be indicated in the above graph and/or by a perceivable alarm during or after the operation.

Based on the above result of the above comparing step, i.e. the decrease or difference in the engine speed, the operator is able to judge whether the current, selected power level of the PPC system is well adapted for the operation at hand and suitable for the tree stems being processed and representing a specific range of one or more of the harvested material attributes.

Based on the judgement made, the operator may change the current power level applied by the PPC system (see step 508).

The above optimum range is selected (see step 510) in such a way that, on one hand, the measured/calculated engine speeds that are higher than the optimum range represent a situation in which, during the operation, the current power level of the engine 22 is not well suited to respond to a load change occurring during the operation. This situation is corrected by selecting another one of the available power levels that offers additional power reserves. The result should be that the measured/calculated engine speeds are within the optimum range.

On the other hand, the measured/calculated engine speeds that are lower than the optimum range represent another situation in which, during the operation, the current power level of the engine 22 is more than well suited to respond to a load change occurring during the operation and thus, there may be power reserves available more than is necessary. This situation is corrected by selecting another one of the available power levels that offers less power reserves. The result should be that the measured/calculated engine speeds are within the optimum range.

For helping the operator to make a more accurate judgement, the control electronics 100, e.g. the PPC system, may calculate one or more trends based on the above decreases or differences. For example, the trend represents the speed droop in average, or described by another representative value, for a group or several groups of the processed tree stems.

When the trend is determined, it may indicate that the speed droop is lower than or higher than the recommended speed droop defined by the above optimum range, or is in its optimum range. This may be indicated in a graph and/or by a perceivable alarm, e.g. with the help of the user interface 101. The control electronics 100, e.g. the PPC system, may notify the operator in a way that is observable by the senses that the current or selected power level is not suitable and/or that a specific one of the available power levels of the PPC system should be selected. This is presented to the operator in a perceivable manner, for example, by means of the user interface 101.

According to an example, the control electronics 100, e.g. the PPC system, is adapted to suggest changing the power level and recommend a specific power level (see step 512). The operator either disables or enables the change (see step 514), for example with the help of the user interface 101, and in the latter case, the control electronics 100, e.g. the PPC system, selects and changes the power level automatically and starts applying that power level.

## Claims

1. A method for controlling a forest harvester (10) including
- a wheeled frame (12),
- an IC engine (22),
- an articulated boom (14) supported on the frame,
- a harvester head (16) suspended from the end of the boom and for processing tree stems of felled trees, and
- control electronics (100) constituting an engine control unit (ECU), an electronic control unit for controlling operations carried out by the harvester head (16), and a processing power control (PPC) system with predetermined power levels, each power level offering a specific level of power delivered by the engine (22) during the operations;
the method comprising:
- applying one of the predetermined power levels when carrying out an operation relating to one of the tree stems and being performed by the harvested head (16) and resulting to a changing load on the engine;
the method being **characterized by**:
- measuring, when carrying out the operation, rotational speed of the engine (22) with the help of one or more sensors (111) that collect data indicative of the rotational speed of the engine and are operatively connected to the control electronics (100);
- automatically determining, in the control electronics (100), a relative or absolute difference between the measured rotational speed of the engine and a predetermined guideline for the rotational speed of the engine (22), the guideline defining a preferred rotational speed or a range of preferred rotational speeds for the operation that is being carried out; and
- automatically notifying by the control electronics (100) an operator of the forest harvester (10) that the determined difference either follows the guideline or deviates from the guideline.

2. The method according to claim 1, wherein the notifying step includes informing the operator that:
- (i) the determined difference follows the guideline and change of the power level being applied is not required, or
- (ii) the determined difference deviates from the guideline and change of the power level being applied is recommended, or
- (iii) the determined difference exceeds the guideline and change of the power level being applied is recommended, or
- (iv) the determined difference is less than the guideline and change of the power level being applied is recommended.

3. The method according to claim 1 or 2, the method further comprising:
- recommending, by the control electronics (100) after the determining step, another one of the predetermined power levels to be applied.

4. The method according to claim 3, the method further comprising:
- enabling or disabling, by the operator, the control electronics (100) to automatically select the recommended power level and change the power level that is being currently applied.

5. The method according to any one of claims 1 to 3, the method further comprising:
- selecting, by the operator, another one of the predetermined power levels to be applied and changing, by the operator, the currently applied power level with the help of the control electronics (100).

6. The method according to claim 4 or 5, the method further comprising:
- applying the selected power level when repeating the carrying out of the operation.

7. The method according to any one of claims 1 to 6, wherein the operation includes holding a tree stem of a felled tree in the harvester head (16), feeding the tree stem through the harvester head, and stopping and crosscutting the tree stem in the harvester head.

8. The method according to any one of claims 1 to 7, wherein the guideline defines one or more threshold values or an optimum range for the rotational speed for carrying out the operation.

9. The method according to claim 8, wherein the guideline defines the rotational speed for the operation being carried out with respect to one or more harvested material attributes describing the tree stem.

10. The method according to claim 9, wherein the harvested material attribute is diameter, length, size, volume, and/or species of the tree stem.

11. The method according to any one of claims 1 to 10, wherein the notifying step includes:
- presenting the difference and/or an alarm concerning the difference to the operator in a perceivable manner with the help of the control electronics (100).

12. The method according to any one of claims 1 to 11, the method further comprising:
- performing the measuring step for a group of the tree stems;
- performing the automatic determining step for the group of tree stems; and
- automatically determining, in the control electronics (100), an average value or another representative value, for the relative or absolute differences determined for each tree stem of the group of tree stems.

13. The method according to any one of claims 1 to 12, the determining step including:
- representing the measured rotational speed of the engine as a speed droop in relation to a requested speed of the engine as set by the control electronics (100), and
- representing the guideline as an optimum range of speed droop for the rotational speed for carrying out the operation.

14. A forest harvester (10) comprising
- a wheeled frame (12),
- an IC engine (22),
- an articulated boom (14) supported on the frame, wherein the boom is adapted to have, for processing tree stems of felled trees, a harvester head (16) suspended from the end of the boom, and
- control electronics (100) constituting an engine control unit (ECU), an electronic control unit for controlling operations carried out by the harvester head (16), and a processing power control (PPC) system with predetermined power levels, each power level offering a specific level of power delivered by the engine (22) during the operations,
- wherein the control electronics (100) is adapted to automatically, under control of an operator, to carry out the method according to any one of claims 1 to 13.

15. The forest harvester according claim 14, wherein the engine (22) comprises a rotatable driveshaft with the help of which mechanical power is transm itted.

## Patentansprüche

1. Verfahren zum Steuern eines forstwirtschaftlichen Erntefahrzeugs (10), das aufweist
- einen Rahmen mit Rädern (12);
- einen Verbrennungsmotor (22);
- einen gelenkigen Ausleger (14), der an dem Rahmen abgestützt ist,
- einen Erntevorsatz (16), der an dem Ende des Auslegers aufgehängt ist und zum Verarbeiten von Baumstämmen von gefällten Bäumen dient, und
- Steuerelektronik (100), die eine Motorsteuereinheit (ECU), eine elektronische Steuereinheit zum Steuern von Betriebsvorgängen des Erntevorsatzes (16) und ein Verarbeitungsleistungssteuersystem (PPC) mit vorgegebenen Leistungspegeln ausbildet, wobei jeder Leistungspegel einen spezifischen Leistungspegel bietet, der von dem Motor (22) während der Betriebsvorgänge bereitgestellt wird;
das Verfahren umfassend:
- Anlegen eines der vorgegebenen Leistungspegel bei der Durchführung eines Betriebsvorgangs, der sich auf einen der Baumstämme bezieht und von dem Erntevorsatz (16) durchgeführt wird und zu einer sich ändernden Belastung des Motors führt;
wobei das Verfahren **gekennzeichnet ist durch**:
- Messen der Drehzahl des Motors (22) beim Durchführen des Betriebsvorgangs mithilfe eines oder mehrerer Sensoren (111), die Daten erfassen, die die Drehzahl des Motors angeben und die mit der Steuerelektronik (100) wirkverbunden sind;
- automatisches Bestimmen, in der Steuerelektronik (100), einer relativen oder absoluten Differenz zwischen der gemessenen Drehzahl des Motors und einer vorgegebenen Richtlinie für die Drehzahl des Motors (22), wobei die Richtlinie eine bevorzugte Drehzahl oder einen Bereich von bevorzugten Drehzahlen für den durchzuführenden Betriebsvorgang definiert; und
- automatisches Benachrichtigen eines Bedieners des forstwirtschaftlichen Erntefahrzeugs (10) **durch** die Steuerelektronik (100) darüber, dass die bestimmte Differenz entweder der Richtlinie entspricht oder davon abweicht.

2. Verfahren nach Anspruch 1, wobei der Benachrichtigungsschritt das Informieren des Bedieners in Bezug darauf einschließt, dass:
- (i) die bestimmte Differenz der Richtlinie entspricht und es nicht erforderlich ist, den angelegten Leistungspegel zu ändern, oder
- (ii) die bestimmte Differenz von der Richtlinie abweicht und es empfohlen wird, den angelegten Leistungspegel zu ändern, oder
- (iii) die bestimmte Differenz die Richtlinie überschreitet und es empfohlen wird, den angelegten Leistungspegel zu ändern, oder
- (iv) die bestimmte Differenz die Richtlinie unterschreitet und es empfohlen wird, den angelegten Leistungspegel zu ändern.

3. Verfahren nach Anspruch 1 oder 2, das Verfahren ferner umfassend:
- Empfehlen, durch die Steuerelektronik (100) nach dem Bestimmungsschritt, einen anderen der vorgegebenen Leistungspegel anzulegen.

4. Verfahren nach Anspruch 3, das Verfahren ferner umfassend:
- Aktivieren oder Deaktivieren der Steuerelektronik (100) durch den Bediener, um automatisch den empfohlenen Leistungspegel auszuwählen und den gegenwärtig angelegten Leistungspegel zu ändern.

5. Verfahren nach einem der Ansprüche 1 bis 3, das Verfahren ferner umfassend:
- Auswählen eines anderen der vorgegebenen anzulegenden Leistungspegel durch den Bediener und Ändern des gegenwärtig anzulegenden Leistungspegels durch den Bediener mithilfe der Steuerelektronik (100).

6. Verfahren nach Anspruch 4 oder 5, das Verfahren ferner umfassend:
- Anlegen des ausgewählten Leistungspegels, wenn die Ausführung des Betriebsvorgangs wiederholt wird.

7. Verfahren nach einem der Ansprüche 1 bis 6, wobei der Betriebsvorgang das Halten eines Baumstamms eines gefällten Baums in dem Erntevorsatz (16), das Zuführen des Baumstamms durch den Erntevorsatz und das Stoppen und Querschneiden des Baumstamms in dem Erntevorsatz einschließt.

8. Verfahren nach einem der Ansprüche 1 bis 7, wobei die Richtlinie einen oder mehrere Schwellenwerte oder einen optimalen Bereich für die Drehzahl zum Ausführen des Betriebsvorgangs definiert.

9. Verfahren nach Anspruch 8, wobei die Richtlinie die Drehzahl für den ausgeführten Betriebsvorgang in Bezug auf eine oder mehrere Ernteguteigenschaften definiert, die den Baumstamm beschreiben.

10. Verfahren nach Anspruch 9, wobei die Ernteguteigenschaft Durchmesser, Größe, Volumen und/oder Spezies des Baumstamms ist.

11. Verfahren nach einem der Ansprüche 1 bis 10, wobei der Benachrichtigungsschritt einschließt:
- Darstellen der Differenz und/oder eines Alarms in Bezug auf die Differenz für den Bediener mithilfe der Steuerelektronik (100) auf wahrnehmbare Weise.

12. Verfahren nach einem der Ansprüche 1 bis 11, das Verfahren ferner umfassend:
- Durchführen des Messschritts für eine Gruppe der Baumstämme;
- Durchführen des automatischen Bestimmungsschritts für die Gruppe von Baumstämmen; und
- automatisches Bestimmen, in der Steuerelektronik (100), eines Durchschnittswerts oder eines anderen repräsentativen Werts für die für jeden Baumstamm der Gruppe von Baumstämmen bestimmten relativen oder absoluten Differenzen.

13. Verfahren nach einem der Ansprüche 1 bis 12, wobei der Bestimmungsschritt einschließt:
- Darstellen der gemessenen Motordrehzahl als Drehzahlabfall in Bezug auf eine von der Steuerelektronik (100) eingestellte angeforderte Motordrehzahl, und
- Darstellen der Richtlinie als optimaler Bereich für den Drehzahlabfall für die Drehzahl zum Durchführen des Betriebsvorgangs.

14. Forstwirtschaftliches Erntefahrzeug (10), umfassend:
- einen Rahmen mit Rädern (12);
- einen Verbrennungsmotor (22);
- einen gelenkigen Ausleger (14), der an dem Rahmen abgestützt ist, wobei der Ausleger ausgelegt ist zum Verarbeiten von Baumstämmen von gefällten Bäumen, wobei ein Erntevorsatz (16) an dem Ende des Auslegers aufgehängt ist, und
- Steuerelektronik (100), die eine Motorsteuereinheit (ECU), eine elektronische Steuereinheit zum Steuern von Betriebsvorgängen des Erntevorsatzes (16) und ein Verarbeitungsleistungssteuersystem (PPC) mit vorgegebenen Leistungspegeln ausbildet, wobei jeder Leistungspegel einen spezifischen Leistungspegel bietet, der von dem Motor (22) während der Betriebsvorgänge bereitgestellt wird,
- wobei die Steuerelektronik (100) angepasst ist zum automatischen Ausführen des Verfahrens nach einem der Ansprüche 1 bis 13 unter der Kontrolle eines Bedieners.

15. Forstwirtschaftliches Erntefahrzeug nach Anspruch 14, wobei der Motor (22) eine drehbare Antriebswelle umfasst, mit deren Hilfe mechanische Leistung übertragen wird.

## Revendications

1. Procédé de commande d'une récolteuse forestière (10) comprenant :
- un châssis à roues (12),
- un moteur à combustion interne, IC (22),
- une flèche articulée (14) supportée sur le châssis,
- une tête de récolte (16) suspendue à l'extrémité de la flèche et destinée au traitement de tiges d'arbres abattus, et
- une électronique de commande (100) constituant une unité de commande de moteur (ECU), une unité de commande électronique pour commander les opérations effectuées par la tête de récolte (16), et un système de commande de puissance de traitement (PPC) avec des niveaux de puissance prédéterminés, chaque niveau de puissance offrant un niveau spécifique de puissance délivré par le moteur (22) durant les opérations ;
le procédé comprenant :
- l'application d'un des niveaux de puissance prédéterminés lors de la réalisation d'une opération relative à l'une des tiges d'arbres et qui est effectuée par la tête de récolte (16) et résultant en une charge changeante sur le moteur ;
le procédé étant **caractérisé par** :
- la mesure, lors de la réalisation de l'opération, de la vitesse de rotation du moteur (22) à l'aide d'un ou plusieurs capteurs (111) qui collectent des données indicatives de la vitesse de rotation du moteur et sont connectés fonctionnellement à l'électronique de commande (100),
- la détermination automatique, dans l'électronique de commande (100), d'une différence relative ou absolue entre la vitesse de rotation mesurée du moteur et une consigne prédéterminée pour la vitesse de rotation du moteur (22), la consigne définissant une vitesse de rotation préférée ou une plage de vitesses de rotation préférées pour l'opération en cours de réalisation, et
- la notification automatique, par l'électronique de commande (100), à un opérateur de la récolteuse forestière (10) que la différence déterminée suit la consigne ou s'écarte de la consigne.

2. Procédé selon la revendication 1, l'étape de notification comprenant l'information de l'opérateur que :
- (i) la différence déterminée suit la consigne et un changement du niveau de puissance appliqué n'est pas requis, ou
- (ii) la différence déterminée s'écarte de la consigne et un changement du niveau de puissance appliqué est recommandé, ou
- (iii) la différence déterminée dépasse la consigne et un changement du niveau de puissance appliqué est recommandé, ou
- (iv) la différence déterminée est inférieure à la consigne et un changement du niveau de puissance appliqué est recommandé.

3. Procédé selon la revendication 1 ou 2, le procédé comprenant en outre :
- la recommandation, par l'électronique de commande (100) après l'étape de détermination, d'un autre des niveaux de puissance prédéterminés à appliquer.

4. Procédé selon la revendication 3, le procédé comprenant en outre :
- l'activation ou la désactivation, par l'opérateur, de l'électronique de commande (100) pour sélectionner automatiquement le niveau de puissance recommandé et changer le niveau de puissance qui est actuellement appliqué.

5. Procédé selon l'une quelconque des revendications 1 à 3, le procédé comprenant en outre :
- la sélection, par l'opérateur, d'un autre des niveaux de puissance prédéterminés à appliquer et le changement, par l'opérateur, du niveau de puissance actuellement appliqué à l'aide de l'électronique de commande (100).

6. Procédé selon la revendication 4 ou 5, le procédé comprenant en outre :
- l'application du niveau de puissance sélectionné lors de la répétition de la réalisation de l'opération.

7. Procédé selon l'une quelconque des revendications 1 à 6, l'opération comprenant le maintien d'une tige d'arbre d'un arbre abattu dans la tête de récolte (16), l'alimentation de la tige d'arbre à travers la tête de récolte, et l'arrêt et le tronçonnage de la tige d'arbre dans la tête de récolte.

8. Procédé selon l'une quelconque des revendications 1 à 7, la consigne définissant une ou plusieurs valeurs de seuil ou une plage optimale pour la vitesse de rotation lors de la réalisation de l'opération.

9. Procédé selon la revendication 8, la consigne définissant la vitesse de rotation pour l'opération en cours de réalisation par rapport à un ou plusieurs attributs de matériau récolté décrivant la tige d'arbre.

10. Procédé selon la revendication 9, l'attribut de matériau récolté étant le diamètre, la longueur, la taille, le volume et/ou l'espèce de la tige d'arbre.

11. Procédé selon l'une quelconque des revendications 1 à 10, l'étape de notification comprenant :
- la présentation de la différence et/ou d'une alarme concernant la différence à l'opérateur d'une manière perceptible à l'aide de l'électronique de commande (100).

12. Procédé selon l'une quelconque des revendications 1 à 11, le procédé comprenant en outre :
- la réalisation de l'étape de mesure pour un groupe des tiges d'arbres,
- la réalisation de l'étape de détermination automatique pour le groupe de tiges d'arbres, et
- la détermination automatique, dans l'électronique de commande (100), d'une valeur moyenne ou d'une autre valeur représentative pour les différences relatives ou absolues déterminées pour chaque tige d'arbre du groupe de tiges d'arbres.

13. Procédé selon l'une quelconque des revendications 1 à 12, l'étape de détermination comprenant :
- la représentation de la vitesse de rotation mesurée du moteur comme une baisse de régime par rapport à une vitesse requise du moteur telle que réglée par l'électronique de commande (100), et
- la représentation de la consigne comme une plage optimale de baisse de régime pour la vitesse de rotation lors de la réalisation de l'opération.

14. Récolteuse forestière (10) comprenant :
- un châssis à roues (12),
- un moteur à combustion interne, IC (22),
- une flèche articulée (14) supportée sur le châssis, la flèche étant adaptée pour avoir, pour l'opération de tiges d'arbres abattus, une tête de récolte (16) suspendue à l'extrémité de la flèche, et
- une électronique de commande (100) constituant une unité de commande de moteur (ECU), une unité de commande électronique pour commander les opérations effectuées par la tête de récolte (16), et un système de commande de puissance de traitement (PPC) avec des niveaux de puissance prédéterminés, chaque niveau de puissance offrant un niveau spécifique de puissance délivré par le moteur (22) durant les opérations ;
- l'électronique de commande (100) étant adaptée pour réaliser automatiquement, sous la commande d'un opérateur, le procédé selon l'une quelconque des revendications 1 à 13.

15. Récolteuse forestière selon la revendication 14, le moteur (22) comprenant un arbre d'entraînement rotatif à l'aide duquel une puissance mécanique est transmise.
